Europäisches Patentamt

European Patent Office

Office européen des brevets

(19)

(11) Numéro de publication: **0 256 951**
**B1**

(12) **FASCICULE DE BREVET EUROPEEN**

(45) Date de publication du fascicule du brevet:
07.02.90

(51) Int. Cl.⁴: **B60D 1/04**, B60D 1/00

(21) Numéro de dépôt: **87401884.9**

(22) Date de dépôt: **14.08.87**

(54) **Dispositif de fixation de barres oscillantes réversibles dans un attelage à fourreau mobile.**

(30) Priorité: **14.08.86  FR 8611825**

(43) Date de publication de la demande:
**24.02.88 Bulletin 88/8**

(45) Mention de la délivrance du brevet:
**07.02.90 Bulletin 90/6**

(84) Etats contractants désignés:
**AT BE DE ES FR GB IT NL SE**

(56) Documents cités:
**EP-A- 0 184 489**
**GB-A- 838 814**
**US-A- 1 574 351**
**US-A- 4 484 760**

(73) Titulaire: **SODISENE FABRICATION SA, 10, rue Courmeaux, F-51100 Reims(FR)**

(72) Inventeur: **Mijot Guy, 3, rue des 16 et 22ème dragons, F-51100 Reims(FR)**

(74) Mandataire: **Gérardin, Robert Jean René, PROT'INNOV INTERNATIONAL SA Résidence de l'Observatoire avenue Georges Clémenceau Boîte Postale 2764, F-51066 Reims Cédex(FR)**

## Description

La présente invention concerne un dispositif de fixation de barre oscillante réversible, en position crochet, sur un attelage de remorquage à fourreau mobile.

Il est connu d'utiliser, sur certains tracteurs, un attelage à barre destinée au remorquage d'engins tractés utilisés en agriculture ou pour les travaux publics.

Ces attelages sont en commun d'être équipés d'un fourreau mobile articulé par rapport au châssis du tracteur et manœuvrable à distance à partir du poste de conduite de celui-ci.

Sur certains de ces attelages, tels que ceux décrits dans les brevets GB-A 1 470 941 et FR-A 2 573 360, ce dernier correspondant au préambule de la revendication 1, la barre de remorquage articulée est remplacée par une barre oscillante amovible et réversible, montée dans un fourreau mobile articulable longitudinalement par rapport au châssis du tracteur. Cette barre oscillante peut être, en conséquence, équipée d'une chape et d'une boule, ou d'un crochet et d'une boule.

Sur l'attelage décrit dans le brevet US-A 1 470 941, la solidarisation longitudinale de la barre au fourreau, qui pivote autour d'un axe, s'obtient par l'intermédiaire d'une goupille amovible traversant le fourreau et la barre de part en part, en passant par un orifice aménagé spécialement à cet effet dans la barre, alors que la solidarisation latérale s'obtient par l'intermédiaire de deux autres goupilles amovibles disposées à l'entrée du fourreau, de part et d'autre de la barre.

Sur l'attelage décrit dans le brevet français FR-A 2 573 360, la solidarisation longitudinale de la barre au fourreau s'obtient, en position chape, par l'intermédiaire d'une goupille amovible traversant le fourreau de part en part, et du crochet situé à l'autre extrémité de la barre, maintenu embecté sur la goupille amovible par une butée fixe et, en position crochet, par l'intermédiaire d'une goupille, traversant le fourreau et la barre de part en part, assurant la solidarisation longitudinale; alors que la solidarisation latérale est obtenue par l'intermédiaire de la butée et de la goupille utilisées pour solidariser la barre au fourreau dans la position chape.

Dans un cas comme dans l'autre, la solidarisation longitudinale de la barre, en configuration chape, exige le perçage dans la barre d'un orifice d'un diamètre assez important, imposé par la section à donner à la goupille de solidarisation pour qu'elle résiste aux efforts de traction: ce qui a pour effet de réduire la section de la barre au droit de cet orifice et, par conséquent, de réduire la résistance mécanique à la traction de celle-ci.

La présente invention a pour but de remédier à ces inconvénients. Cette invention, telle qu'elle est caractérisée dans les revendications, résout le problème consistant à créer un dispositif de fixation de barre oscillante réversible, en position crochet, n'exigeant aucun perçage de la barre pour assurer sa solidarisation.

L'attelage de remorquage à fourreau mobile de l'invention comportant une barre oscillante réversible, ladite barre oscillante réversible étant constituée par une barre de remorquage munie à l'une de ses extrémités d'un crochet d'attelage et à son autre extrémité d'une chape d'attelage comportant des branches traversées par les orifices de montage de l'axe de chape, la barre oscillante réversible pouvant être montée dans le fourreau mobile dans deux positions, à savoir une position chape dans laquelle le crochet est à l'intérieur du fourreau tandis que la chape est en saillie vers l'extérieur, et une position crochet dans laquelle la chape est à l'intérieur du fourreau, tandis que le crochet est en saillie vers l'extérieur, est caractérisé de manière générale en ce qu'il comporte deux joues parallèles, fixées verticalement à l'intérieur du fourreau mobile, et parallèlement aux parois latérales de celui-ci, lesdites joues étant écartées l'une de l'autre d'une distance au moins égale à l'épaisseur de l'une des branches de la chape, un axe amovible traversant le fourreau mobile, de part en part, en passant par des orifices, percés à cet effet dans les parois de celui-ci, et par des orifices percés dans les joues, en passant par les orifices de montage de l'axe de chape, assurant la solidarisation longituidnale de la barre oscillante réversible au fourreau mobile, et deux axes amovibles montés à l'entrée du fourreau mobile de part et d'autre de la barre oscillante réversible, assurant la solidarisation transversale.

Le bord des joues, situé du côté de l'entrée du fourreau mobile, est plié selon un angle facilitant l'introduction de l'une des branches de la chape, entre les joues.

Des axes amovibles sont utilisés pour solidariser longitudinalement la barre oscillante réversible au fourreau mobile lorsque celle-ci est montée en position chape.

Les avantages obtenus grâce à cette invention consistent essentiellement en ceci que, en position crochet, la barre oscillante réversible se trouve solidarisée au fourreau mobile par des moyens offrant les mêmes caractéristiques mécaniques en traction qu'un attelage en position "chape", sans que cela nécessite d'adaptation particulière de la barre oscillante réversible, qui conserve ainsi son caractère universel et ses caractéristiques mécaniques initiales (pas de réductin de section résultant d'un perçage dans une zone critique de la barre).

D'autres caractéristiques et avantages apparaîtront dans la description qui va suivre du dispositif de fixation de barre oscillante réversible, en position crochet, sur un attelage de remorquage à fourreau mobile correspondant à celui décrit dans le brevet français FR-A 2 573 360, donné à titre d'exemple non limitatif au regard du dessin sur lequel:

– la figure 1 représente une vue de dessus, en coupe longitudinale, du fourreau mobile muni du dispositif selon l'invention, équipé d'une barre oscillante réversible montée en position crochet.

– La figure 2 représente une vue de dessus, en coupe longitudinale, du fourreau mobile muni du dispositif selon l'invention, équipé d'une barre oscillante réversible montée en position chape.

Les figures représentent un attelage de remorquage à fourreau mobile et à barre oscillante réversible, comprenant essentiellement un fourreau mobile 1, comportant des orifies horizontaux 1a et 1b, et verticaux 1c, 1d, 1e, 1f, 1g, 1h, muni intérieurement de joues 2 et 3, percées d'orifices 2a et 3a, et de bords inclinés 2b et 3b; une barre oscillante 4, munie d'un crochet 5, et d'une chape 6 comportant des branches 4a et 6a; un axe amovible 7 de solidarisation longitudinale de la chape 6 au fourreau 1; de deux axes amovibles 8 et 9, de solidarisation longitudinale et deux axes 11 et 12 de stabilisation transversale de la barre oscillante réversible 4 au fourreau mobile 1, selon sa position, et d'une goupille 10 d'immobilisation longitudinale de l'axe 7 sur le fourreau mobile 1.

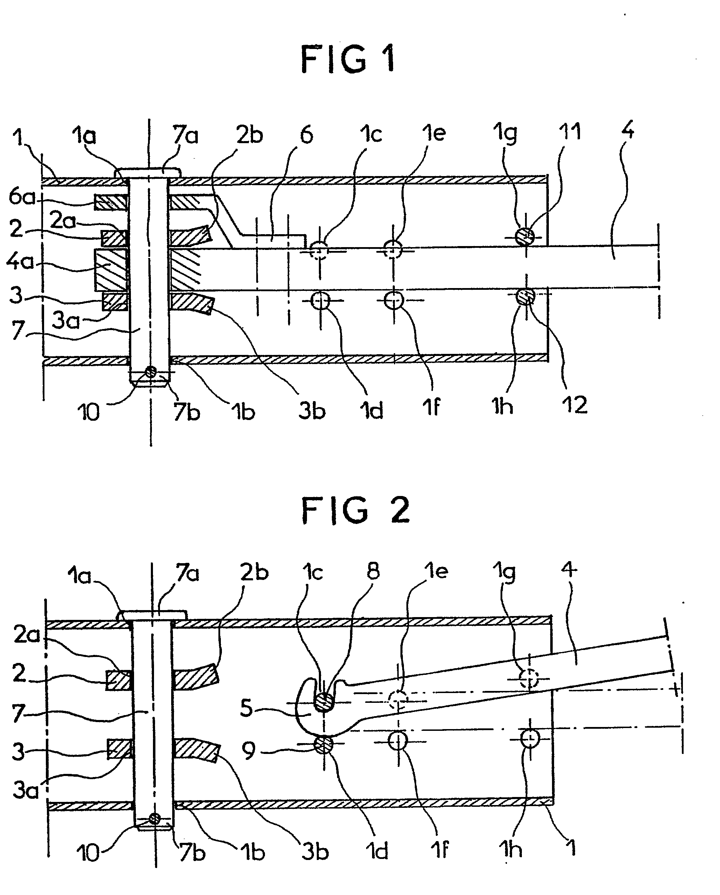

En examinant la figure 1, on remarque que, en position de crochet (après avoir amené la barre oscillante réversible 4 dans le plan médian longitudinal du fourreau mobile 1), la barre oscillante réversible 4 est introduite dans le fourreau 1 jusqu'à insertion de la branche 4a de la chape 6 entre les joues 2 et 3. Il suffit alors de faire concorder les orifices existant dans les branches de la chape 6 avec ceux, 2a et 3a, percés dans les joues 2 et 3, et ceux, 1a et 1b, percés dans le fourreau mobile 1, puis d'introduire l'axe amovible 7 par l'un des orifices 1a du fourreau 1, pour solidariser l'ensemble longitudinalement en travesant celui-ci de part et d'autre, jusqu'à ce que la tête 7a de l'axe 7 vienne en contact avec le côté du fourreau 1 et que l'extrémité 7b de l'axe 7 fasse saillie à l'extérieur dudit fourreau par l'orifice 1b; il reste alors à maintenir l'axe 7 en position par l'intermédiaire d'une goupille 10. La solidarisation latérale est ensuite obtenue par mise en place des axes amovibles 11 et 12 dans les orifices 1g et 1h, aménagés à l'entrée du fourreau mobile 1.

En examinant la figure 2, on remaruqe que, en position chape, l'axe 7 est monté en attente sur le fourreau, dans la position qu'il occupe normalement lorsque la barre est en position crochet; à moins que l'axe 7 ne serve lui-même d'axe de chape. La barre est, dans ce cas, solidarisée longitudinalement au fourreau mobile 1 par l'intermédiaire des axes amovibles 8 et 9, introduits dans les orifices 1c et 1d ou 1e et 1f, selon le débattement désiré, de façon que le crochet 5 soit embecté sur l'axe 8 et retenu contre celui-ci par l'axe 9 monté respectivement dans les orifices 1c et 1d ou 1e et 1f.

La solidarisation latérale de la barre 4 au fourreau 1 peut être obtenue, si nécessaire, en cas d'utilisation non oscillante de la barre, en utilisant les mêmes moyens que pour le montage en position crochet, c'est-à-dire, en utilisant deux autres axes amovibles, identiques aux axes 8 et 9, montés dans les orifices 1g et 1h situés à l'entrée du fourreau mobile 1.

Comme on le voit, ce dispositif permet le montage en position "crochet" ou en position "chape", dans cette sorte de fourreau, de toutes les barres oscillantes réversibles, correspondant à un certain standard, sans que cela exige la moindre transformation de celle-ci par des perçages supplémentaires; par ailleurs, la mise en place de l'axe 7 est largement facilitée par le déplacement du fourreau mobile en position de débattement vers le bas et l'arrière du tracteur.

## Revendications

1. Attelage de remorquage à fourreau mobile comportant une barre oscillante réversible, ladite barre oscillante réversible (4) étant constituée par une barre de remorquage munie à l'une de ses extrémités d'un crochet d'attelage (5) et à son autre extrémité d'une chape d'attelage (6) comportant des branches traversées par les orifices de montage de l'axe de chape, la barre oscillante réversible (4) pouvant être montée dans le fourreau mobile (1) dans deux positions, à savoir une position chape dans laquelle le crochet (5) est à l'intérieur du fourreau (1) tandis que la chape (6) est en saillie vers l'extérieur, et une position crochet dans laquelle la chape (6) est à l'intérieur du fourreau, tandis que le crochet (5) est en saillie vers l'extérieur, caractérisé en ce qu'il comporte deux joues parallèles (2 et 3), fixées verticalement à l'intérieur du fourreau mobile (1), et parallèlement aux parois latérales de celui-ci, lesdites joues (2, 3) étant écartées l'une de l'autre d'une distance au moins égale à l'épaisseur de l'une des branches (4a, 6a) de la chape (6), un axe amovible (7) traversant le fourreau mobile (1), de part en part, en passant par des orifices (1a, 1b), percés à cet effet dans les parois de celui-ci, et par des orifices (2a, 3a) percés dans les joues (2, 3), en passant par les orifices de montage de l'axe de chape, assurant la solidarisation longitudinale de la barre oscillante réversible (4) au fourreau mobile (1), et deux axes amovibles (11 et 12) montés à l'entrée du fourreau mobile (1) de part et d'autre de la barre oscillante réversible (4), assurant la solidarisation transversale.

2. Attelage de remorquage selon la revendication 1, caractérisé en ce que le bord (2b ou 3b) des joues (2 et 3), situé du côté de l'entrée du fourreau mobile (1), est plié selon un angle facilitant l'introduction de l'une des branches (4a) de la chape (6) entre les joues (2, 3).

3. Attelage de remorquage selon la revendication 1, caractérisé en ce que des axes amovibles (8, 9) sont utilisés pour solidariser longitudinalement la barre oscillante réversible (4), au fourreau mobile (1) lorsque celle-ci est montée en position chape.

## Patentansprüche

1. Anhängerkupplung mit beweglichem Futteral, mit einer hin- und herschwenkbaren Stange, wobei die hin- und hergehende Stange (4) aus einer Schleppstange gebildet ist, die an einem ihrer Enden mit einem Kupplungshaken (5) und an ihrem anderen Ende mit einer Abschleppkupplung (6) versehen ist, die von den Montageöffnungen der Kupplungsachse durchsetzte Arme aufweist, woei die hin- und herschwingende Stange (4) in dem beweglichen Futteral (1) in zwei Stellungen angeordnet sein kann, nämlich in einer Kupplungsstellung in der der Haken (5) sich im Inneren des Futterals (1) befindet, während die Kupplung (6) nach außen vorspringt, und in einer Hakenstellung, in der sich die Kupplung (6) im Inneren des Futterals befindet, während der Haken (5) nach außen vorspringt, dadurch gekennzeichnet, daß sie zwei parallele Seitenteile (2 und 3) aufweist, die vertikal im Inneren des beweglichen Futterals (1) und parallel zu den Seitenwänden von diesem festgelegt sind, wobei die genannten Seitenteile (2, 3) unter einem Abstand voneinander beabstandet sind, der wenigstens gleich der Dicke eines der Arme (4a, 6a) der Kupplung (6) ist, wobei eine entfernbare Achse (7) vollständig das bewegliche Futteral (1) durchquert, durch hindurchtreten durch Öffnungen (1a, 1b), die hierzu in seinen Seitenwänden eingebracht sind, und durch Öffnungen (2a, 3a), die in den Seitenteilen (2, 3) ausgebildet sind, unter Hindurchtreten durch die Motnageöffnungen der Kupplungsachse, wobei die Längsverbindung der hin- und herschwenkenden Stange (4) mit dem beweglichen Futteral (1) sichergestellt wird, und zwei bewegliche Achsen (11 und 12) am Eingang des beweglichen Futterals (1) beiderseits der hin- und herschwenkenden Stange (4) aufweist, zur Sicherstellung der Querverbindung.

2. Anhängerkupplung nach Anspruch 1, dadurch gekennzeichnet, daß der auf der Eingangsseite des beweglichen Futterals (1) angeordnete Rand (2b oder 3b) der Seitenteile (2 und 3) gemäß einem Winkel gefaltet ist, zur Erleichterung des Einführens des einen der Arme (4a) der Kupplung (6) zwischen die Seitenteile (2, 3).

3. Anhängerkupplung nach Anspruch 1, dadurch gekennzeichnet, daß bewegliche Achsen (8, 9) verwendet werden, um in Längsrichtung die hin- und herschwenkende Stange (4) mit dem beweglichen Futteral (1) zu verbinden, wenn diese sich in Kupplungsstellung befindet.

**Claims**

1. Drawgear with movable sleeve comprising a revesible swing bar, said reversible swing bar (4) consisting of a towing bar fitted at one of its ends with a tow hook (5), and at its other end with a coupler head (6) comprising branches through which the openings are drilled for mounting the coupler head shaft, the reversible swing bar (4) being able to be mounted in the movable sleeve (1) in two positions, i.e. a coupler head position in which the hook (5) is situated inside the sleeve (1) whereas the coupler head (6) protrudes outwardly, and a hook position in which the coupler head (6) is inside the sleeve, while the hook (5) protrudes outwardly, characterized in that it comprises two parallel cheeks (2 and 3) secured vertically inside the mobile sleeve (1) and parallel with the side walls of the latter, sais sleeves (2, 3) being away from each other by a distance at least equal to the thickness of one of the branches (4a, 6a) of the coupler head (6), a removable shaft (7) passing through the movable sleeve (7) from one side to the other, passing through openings (1a, 1b) drilled for the purpose in the walls of said sleeve, and through openings (2a, 3a) drilled in the flanges (2, 3) passing thorugh the mounting openings of the coupler head shaft, ensuring the longitudinal interlocking of the reversible swing bar (4) with the movable sleeve (1), and two removable shafts (11 and 12) mounted at the inlet of the movable sleeve (1) on both sides of the reversible swing bar (4), ensuring transversal interlocking.

2. Drawgear according to claim 1, characterized in that the edge (2b or 3b) of the flanges (2 and 3) situated on the movable sleeve (1) inlet side is folded to an angle promoting the introduction of one of the branches (4a) of the coupler head (6) between the flanges (2, 3).

3. Drawgear according to claim 1, characterized in that removable shafts (8, 9) are used to longitudinally interlock the reversible swing bar (4) in movable sleeve (1) when said bar is mounted in hook position.

EP 0 256 951 B1

# FIG 1

# FIG 2